(19) Europäisches Patentamt
European Patent Office
Office européen des brevets

(11) Veröffentlichungsnummer: **0 592 422 B1**

(12) **EUROPÄISCHE PATENTSCHRIFT**

(45) Veröffentlichungstag der Patentschrift: **30.11.94**

(51) Int. Cl.⁵: **B01J 2/14**, C01F 5/02, C04B 35/04

(21) Anmeldenummer: **91914475.8**

(22) Anmeldetag: **27.08.91**

(86) Internationale Anmeldenummer:
**PCT/AT91/00096**

(87) Internationale Veröffentlichungsnummer:
**WO 92/04111 (19.03.92 92/07)**

(54) **VERFAHREN ZUR HERSTELLUNG VON SINTERMAGNESIA.**

(30) Priorität: **05.09.90 AT 1815/90**

(43) Veröffentlichungstag der Anmeldung:
**20.04.94 Patentblatt 94/16**

(45) Bekanntmachung des Hinweises auf die
Patenterteilung:
**30.11.94 Patentblatt 94/48**

(84) Benannte Vertragsstaaten:
**AT BE CH DE DK ES FR GB GR IT LI LU NL SE**

(56) Entgegenhaltungen:
**EP-A- 0 013 182**
**GB-A- 1 376 325**
**GB-A- 2 046 658**
**US-A- 2 579 886**

(73) Patentinhaber: **Veitsch-Radex Aktiengesellschaft für feuerfeste Erzeugnisse**
**Schubertring 10-12**
**A-1010 Wien (AT)**

(72) Erfinder: **GRILL, Michael c/o Sardamag Torino-Office**
**Via Bruno Buozzi 10**
**I-123 Torino (IT)**
Erfinder: **DEUTSCH, Josef**
**Gösserstrasse 81a**
**A-8700 Leoben (AT)**

(74) Vertreter: **Weinzinger, Arnulf, Dipl.-Ing. et al**
**Riemergasse 14**
**A-1010 Wien (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Herstellung von grobkörniger Sintermagnesia, bei dem von einem pulverförmigen Magnesiumoxid ausgegangen wird, dieses zu Grünkörpern verarbeitet wird und die Grünkörper einem Sinterbrand bei hoher Temperatur unterworfen werden.

Um bei Produkten aus Sintermagnesia die gewünschte Hochtemperaturbeständigkeit zu erhalten, ist das Erzielen einer ausreichend hohen Dichte der Sintermagnesia, welche üblicherweise kurz "Sinter" genannt wird, erforderlich. In der Regel wird eine Rohdichte der Sintermagnesia von 3,3 $g/cm^3$ als Mindestwert angesehen, aber man strebt danach, über 3,4 $g/cm^3$ liegende Rohdichten zu erzielen. Um diesem Ziel entsprechen zu können, müssen die der Sinterbehandlung bei hoher Temperatur, bei der ein Totbrennen des Materials erfolgt, zu unterwerfenden Grünkörper bereits eine ausreichend hohe Dichte von mindestens etwa 1,7 $g/cm^3$, vorzugsweise aber von mehr als 2,3 $g/cm^3$, und eine zu beträchtlicher Verdichtung beim Glühbrand tendierende Struktur aufweisen. Um solche Grünkörper zu bilden, hat man bisher Magnesiumoxid mittels mechanischer Pressen verdichtet, wobei insbesondere sogenannte Walzenbrikettpressen für dieses Verdichten verwendet worden sind. Der Einsatz mechanischer Fressen zur Bildung von Grünkörpern, deren Dichte den vorerwähnten Anforderungen genügt, erfordert aber einen verhältnismäßig großen Investitionsaufwand und im Betrieb den Einsatz beträchtlicher Energiemengen, weil zum Kompaktieren des pulverförmigen Magnesiumoxids sehr große Kräfte angewendet werden müssen. Trotz der Anwendung hoher Kräfte hat aber ein verhältnismäßig großer Anteil der von den Pressen gelieferten Grünkörper eine zu geringe mechanische Festigkeit. Solche Grünkörper zerfallen bei der an das Pressen anschließenden Manipulation und man muß zur Aufarbeitung des in diesen Grünkörpern enthalten gewesenen Materials dieses Material absieben und einer neuerlichen Verpressung unterwerfen, wodurch sich eine erhebliche Erhöhung des für das Verpressen erforderlichen Energieaufwandes und eine entsprechende Verminderung der Produktionsleistung der Pressen ergibt, da ja ein beträchtlicher Teil des zu verarbeitenden Magnesiumoxids mehrmals kompaktiert werden muß.

Es ist ein Ziel der vorliegenden Erfindung, ein Verfahren eingangs erwähnter Art zu schaffen, welches mit wesentlich geringerem Investitions- und Betriebsenergieaufwand als die vorerwähnte bekannte Technik die Herstellung einer ausreichend dicht gebrannten grobkörnigen Sintermagnesia ermöglicht. Das erfindungsgemäße Verfahren eingangs erwähnter Art ist dadurch gekennzeichnet, daß aus einem aktiven reaktionsfähigen pulverförmigen Magnesiumoxid mit einer Korngröße < 0,15 mm durch Aufbaugranulation auf einem Granulierteller bei einem Materialdurchsatz von weniger als 250 kg $MgO/m^2$ Tellerfläche und Stunde die Grünkörper, welche einem Sinterbrand unterworfen werden, gebildet werden. Ein solches reaktionsfähiges Magnesiumoxid ist z.B. "kaustisch" gebrannte Magnesia.

Vorzugsweise wird gemahlenes kaustisches Magnesiumoxid, welches eine Korngrößenverteilung aufweist, bei der 90 % des Materials kleiner als 0,1 mm sind, zu den Grünkörpern verarbeitet. Dies ist auch aus wirtschaftlicher Sicht besonders günstig, weil kaustisches Magnesiumoxid dieser Korngröße in der Regel zu günstigen Bedingungen zur Verfügung gestellt werden kann.

Durch die erfindungsgemäße Ausbildung eines Verfahrens hier in Rede stehender Art kann der vorstehend genannten Zielsetzung gut entsprochen werden. Die Aufbaugranulation auf einem Granulierteller kann mit verhältnismäßig geringer Antriebsleistung durchgeführt werden und ermöglicht bei Einhaltung der angegebenen Bedingungen die Bildung von Grünkörpern mit einer, wie vorstehend erwähnt, hinreichend hohen Dichte.

Es kann dabei erwähnt werden, daß der Einsatz der Aufbaugranulation zur Kornvergröberung feinkörniger Substanzen auf verschiedenen Gebieten der Technik bekannt ist, wie z.B. bei der Behandlung von Zementrohmehl oder bei der Behandlung von feinkörnigen Eisenerzen. Üblicherweise wird bei diesen bekannten Techniken, bei denen eine Aufbaugranulation vorgesehen wird, bei der Verwendung von Granuliertellern ein Materialdurchsatz vorgesehen, der zwischen 1 und 8 Tonnen/$m^2$ Tellerfläche und Stunde liegt. Es ist praktisch nicht möglich, mit einer solchen bekannten Technik pulverförmiges Magnesiumoxid zu Grünkörpern zu agglomerieren, welche eine hinreichende Dichte haben, daß sie bei einem nachfolgenden Sinterbrand bei hoher Temperatur eine ausreichende weitere Verdichtung erfahren. Erst das beim erfindungsgemäßen Verfahren vorgesehene Abgehen von Parametern, welche die bisher übliche Granulation charakterisieren, und zwar insbesondere ein Abgehen vom bisher üblichen Materialdurchsatz, gibt beim erfindungsgemäßen Verfahren die Möglichkeit, auf einfache Weise Grünkörper zu erzielen, welche eine Dichte und Festigkeit aufweisen, die ein problemloses Durchführen des nachfolgenden Sinterbrandes bei hoher Temperatur erlauben und dabei eine weitere wesentliche Verdichtung im Zuge dieses Hochtemperaturbrandes erzielen lassen.

Der Einsatz der auf einem Granulierteller durchzuführenden Aufbaugranulation bietet auch den weiteren Vorteil einer selbsttätig arbeitenden Größenklassierung der zum Austrag aus dem Granulierteller kommenden Granalien dahingehend, daß nur die größten Granalien, die sich jeweils im Granulierteller befinden, ausgetragen werden, während kleinere Granalien, solange sie noch im Granulierteller sind, laufend an Größe zunehmen. Die Austragung der im Granulierteller gebildeten Grünkörper aus dem Granulierteller erfolgt durch den bei einem solchen Granulierteller vorgesehenen Aufbau selbsttätig; ein solcher Granulierteller ist eine zylindrische Schüssel mit einem vom Rand des Tellerbodens aufragenden Bord, und es ist diese Schüssel um eine zentrisch im Schüsselboden angeordnete Achse drehbar gelagert. Die durch den Tellerboden gelegte Ebene verläuft unter einem Winkel von etwa 40 bis 70° zur Horizontalen geneigt. Das zu agglomerierende Material wird zusammen mit einem Bindemittel fortlaufend in diesen Teller eingetragen und gelangt zunächst wegen der Sortierwirkung des Tellers in den Bereich der tiefsten Stelle des Tellers. Durch die Drehung des Tellers agglomeriert das eingetragene Material zu nach und nach immer größer werdenden Körpern, welche mit zunehmender Größe im Teller nach oben steigen und schließlich über den Rand des Bordes hinweg ausgetragen werden. So verlassen die jeweils größten Granalien den Granulierteller am Überlauf, während das Feingut an der tiefsten Stelle des Feststoffbettes im Granulierteller so lange verbleibt, bis es in Granalien eingebaut wird. So werden ausschließlich gut geformte Granalien, welche beim vorliegenden Verfahren auch eine gute Festigkeit haben, aus dem Granulierteller ausgetragen, wobei praktisch kein Feinmaterial mitgerissen wird.

Im Interesse einer möglichst hohen Dichte der beim erfindungsgemäßen Verfahren entstehenden Granalien, die die Grünkörper bilden, sieht man beim erfindungsgemäßen Verfahren vorzugsweise vor, daß der Materialdurchsatz (je nach Korngröße) zwischen 35 und 220 kg/m$^2$ Tellerfläche und Stunde gehalten wird. Hat das zu verarbeitende pulverförmige Magnesiumoxid eine verhältnismäßig große Korngröße, so empfiehlt sich in der Regel ein im unteren Teil dieses Bereiches liegender Materialdurchsatz, um auf einfache Weise Grünkörper mit der angestrebten hohen Dichte zu erhalten.

Hinsichtlich des Materialdurchsatzes wird vorzugsweise eine Ausführungsform des erfindungsgemäßen Verfahrens vorgesehen, welche dadurch gekennzeichnet ist, daß bei der Granulation mit einem Materialdurchsatz gearbeitet wird, der in dem durch die nachfolgend genannten Eckpunkte definierten Flächenbereich des durch die den Materialdurchsatz (kg/m$^2$.h) angebende Abszisse und durch die den Medianwert $d_{50}$ der Korngröße (mittlere Korngröße $d_{50}$) des Magnesiumoxids angebende Ordinate gebildeten Flächenquadranten liegt, wobei die Eckpunkte dieses Flächenbereiches annähernd bei:

| A) | 21 $\mu$m - 25 kg/m$^2$.h | B) | 21 $\mu$m - 70 kg/m$^2$.h |
|---|---|---|---|
| C) | 3,0 $\mu$m - 220 kg/m$^2$.h | D) | 0,5 $\mu$m - 220 kg/m$^2$.h |
| E) | 0,5 $\mu$m - 75 kg/m$^2$.h | F) | 10 $\mu$m - 25 kg/m$^2$.h |

liegen. In den zwischen den Eckpunkten D), E), F) und A) und der Abszissenachse und der Ordinatenachse gelegenen Flächenbereich ist technisch gesehen ein Arbeiten möglich, aber wirtschaftlich nicht vorteilhaft.

Es ist weiter vorteilhaft, wenn bei der Granulation eine mittlere Verweilzeit des Materials am Granulierteller von etwa $\frac{1}{2}$ h bis 2 h, vorzugsweise etwa 1 h, eingehalten wird. Hiezu kann die Bordhöhe des Granuliertellers so gewählt werden, daß ein dynamischer Tellerinhalt zustandekommt, der die Einhaltung der vorgesehenen mittleren Verweilzeit des Materials im Granulierteller bei der jeweils vorliegenden, gegebenen Tellerneigung gewährleistet.

Es ist es dabei günstig, wenn ein Granulierteller, dessen Bordhöhe größer ist als $\frac{1}{4}$ des Tellerdurchmessers, verwendet wird. Die Neigung $\beta$, die der Granulierteller in bezug auf die Horizontale hat, wird vorteilhaft zwischen 55° und 65° gewählt.

Die Drehzahl des Granuliertellers wird zweckmäßig auf empirischem Wege so gewählt, daß der Feinanteil des im Granulierteller befindlichen Materials bis kurz vor den oberen Scheitelpunkt des Granuliertellers in Drehrichtung mitgenommen wird; so kann ein gleichmäßiger Tellerbetrieb und eine maximale Klassierung der Granalien erzielt werden.

Als Granulationsbindemittel kann im einfachsten Fall Wasser verwendet werden, wobei die Zugabemenge empirisch unter Beobachtung der entstehenden Granalien festgelegt werden kann, und man trachtet dabei, mit einer möglichst geringen Bindemittelmenge das Auslangen zu finden. Bei richtig dosierter Bindemittelmenge ergeben sich Granalien mit glatter Oberfläche. Wird zu viel Bindemittel (z.B. Wasser) zugegeben, ergibt sich meist ein brombeerartiges Aussehen der Granalien; wird zu wenig Bindemittel (z.B. Wasser) zugegeben, ergeben sich Granalien, deren Oberfläche ein golfballartiges Aussehen (Eindellungen an der Oberfläche) aufweist. Die Verwendung von Wasser als Granulationsbindemittel hat den Vorteil, daß durch das Bindemittel keine Fremdstoffe in die Granalien eingebracht werden, welche sich gegebenenfalls störend auswirken könnten.

Es muß beim Sinterbrand von nur mit Wasser gebundenen Grünkörpern vorsichtig vorgegangen werden, weil nur mit Wasser gebundene Granalien beim Aufheizen im Bereich von etwa 400°C bis 700°C einen Festigkeitsabfall erleiden. Dem kann dadurch begegnet werden, daß als Granulationsbindemittel eine wässerige Lösung oder Suspension eines bindenden Stoffes, der beim Sinterbrand praktisch rückstandsfrei verflüchtigt oder als Rückstand Magnesiumoxid bildet, wie z.B. Magnesiumsulfat, Magnesiumchlorid oder Magnesiumlignosulfonat (Sulfitablauge), verwendet wird.

Die Erfindung wird nun unter Bezugnahme auf die Zeichnung und auf die Beispiele weiter erläutert.

In der Zeichnung zeigen:

Fig. 1 ein Beispiel einer mit einem Granulierteller versehenen Granuliervorrichtung in Seitenansicht,

Fig. 2 einen Granulierteller in Ansicht von vorne, und

Fig. 3 einen solchen Granulierteller in einem der Linie III-III in Fig. 2 entsprechend geführten Schnitt; und

Fig. 4 ein Diagramm zur Wahl des Materialdurchsatzes bei bestimmter gegebener Korngröße des zu verarbeitenden pulverförmigen Magnesiumoxids.

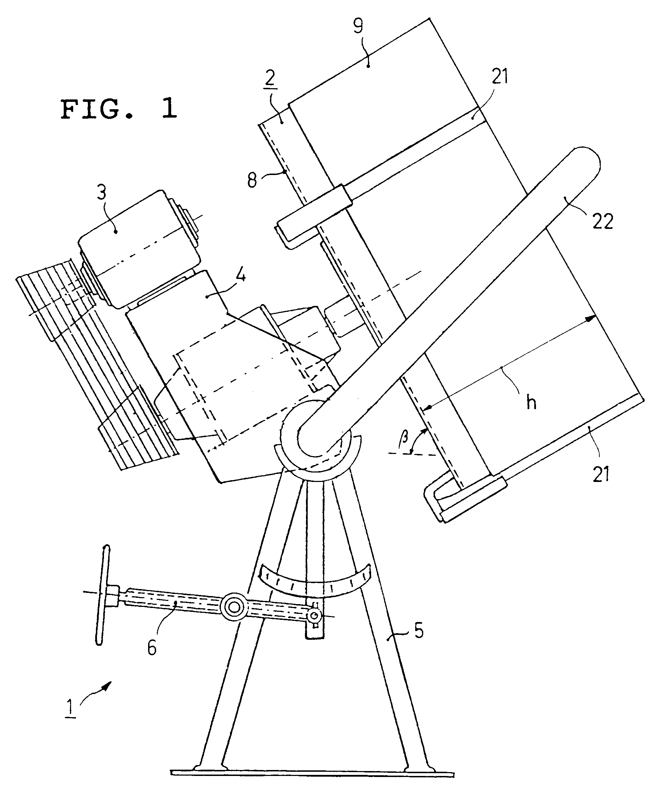

Die in Fig. 1 dargestellte Granuliervorrichtung 1 weist einen Granulierteller 2 auf, der an einer mit einem Motor 3 versehenen Antriebseinheit 4 drehbar gelagert und zusammen mit dieser Antriebseinheit auf einem Traggestell 5 schwenkbar angeordnet ist. Es kann dabei mit einer Verschwenkeinrichtung 6 die Neigung $\beta$ des Granuliertellers 2 in bezug auf die Horizontale 7 eingestellt werden. Die Drehzahl des Granuliertellers ist einstellbar. Der Granulierteller 2 hat einen vorzugsweise ebenen (d.h. ohne Einbauten, Stufen oder dgl. ausgebildeten) Boden 8, an dessen Umfangsrand entlang ein Bord 9 vorgesehen ist. Es ist bei dieser Ausführungsform der Granuliervorrichtung der Bord 9 an Haltern 21 höhenverstellbar geführt, so daß die Höhe h des Bordes auf den jeweils gewünschten Wert einstellbar ist. Ein Träger 22, der am Gestell 5 befestigt ist, ist für die Anbringung von Hilfseinrichtungen, wie einer Sprüheinrichtung oder eines Schabers, vorgesehen.

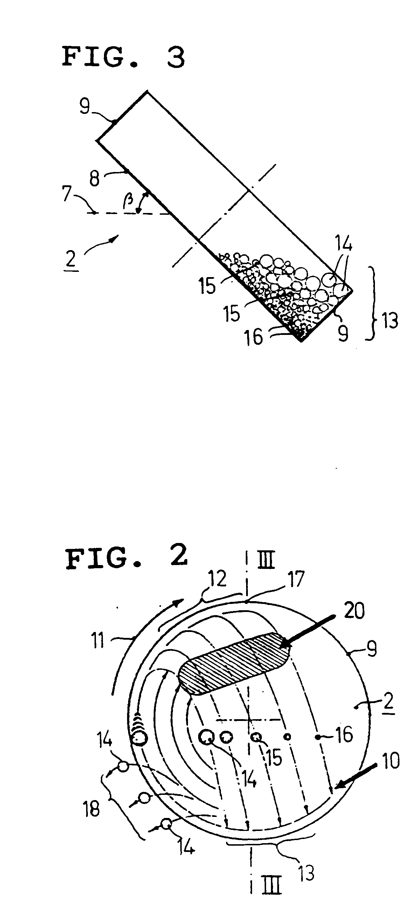

In den Fig. 2 und 3 ist die Funktionsweise bei einem auf einem Granulierteller 2 ausgeführten Granuliervorgang schematisch angedeutet. Das pulverförmige Material, aus dem die Grünkörper durch Aufbaugranulation gebildet werden, wird bei 10 auf den Granulierteller aufgegeben und im Granulierteller durch die Drehung desselben, welche durch den Pfeil 11 angedeutet ist, in Drehrichtung mitgenommen. Sobald die auf die Teilchen wirkende Schwerkraft überwiegt, was in dem in Fig. 2 dargestellten Beispiel im Bereich 12 stattfindet, fallen die Teilchen wieder in den unteren Bereich 13 des Granuliertellers 2 zurück. Im Bereich 20 wird Bindemittel, z.B. Wasser, in den Granulierteller eingesprüht. Es lagern sich dadurch im Zuge der kollernden Bewegung des im Granulierteller befindlichen Materials die Teilchen aneinander an und bilden kugelartige Granalien, die sich im Zuge des Granuliervorganges durch fortlaufendes Anlagern weiterer Materials vergrößern. In Drehrichtung 11 gesehen fallen im Bereich 12 zuerst die größeren Granalien bzw. Körper 14, dann die mittelgroßen Granalien 15 und schließlich die den Feinanteil bildenden Teilchen 16 in den unteren Bereich 13 des Granuliertellers zurück. Die Lage des Bereiches 12, bis zu dem die Teilchen im Granulierteller durch dessen Drehung mitgenommen werden, kann durch Wahl der Drehzahl des Granuliertellers verändert werden. Vorzugsweise wird die Drehzahl des Granuliertellers so eingestellt, daß die den Feinanteil bildenden Teilchen 16 bis kurz vor den oberen Scheitelpunkt 17 des Granuliertellers 2 mitgenommen werden. Es wird durch eine solche Einstellung die selbsttätige Größenklassierung im Granulierteller 2 dahingehend, daß sich im unteren Bereich 13 des Granuliertellers, wie Fig. 3 zeigt, zuunterst die den Feinanteil bildenden Teilöhen 16 und zuoberst die größeren Granalien bzw. Körper 14 befinden, unterstützt. Wird fortlaufend pulverförmiges Material dem Granulierteller zugeführt, was über eine Dosiervorrichtung, z.B. eine Dosierbandwaage vorgenommen werden kann, erfolgt selbsttätig fortlaufend ein Austragen der größten Granalien 14 über den Rand des Bordes 9 des Granuliertellers 2, wie bei 18 angedeutet ist. Diese Granalien 14 stellen die durch die Aufbaugranulation gebildeten Grünkörper dar. Die kleineren bzw. mittelgroßen Granalien 15 nehmen, solange sie im Granulierteller 2 sind, durch Anlagerung von das Feinmaterial bildenden Teilchen 16 laufend an Größe zu.

**Beispiel 1:**

Es wurde in einen Granulierteller mit einem Durchmesser von 1000 mm und einer Bordhöhe von 500 mm, welcher einen ebenen Boden ohne Einbauten, Stufen oder dgl. aufwies und dessen Boden in einem Winkel $\beta$ = 60° zur Horizontalen geneigt war, fortlaufend pulverförmige synthetische, kaustisch gebrannte Magnesia in einer Menge von 100 kg/m²·h bezogen auf die 0,785 m² große Fläche des Granuliertellers eingetragen. Zum Eintragen wurde eine Dosierbandwaage benützt. Gleichzeitig wurde als Bindemittel Wasser in einer Menge von 200 l pro t Magnesia über ein Regelventil, einen Mengenmesser und eine Fächerdüse in den Granulierteller eingesprüht. Alternativ wurde auch ein wässeriges Bindemittel in Form einer wässerigen Lösung von Magnesiumlignosulfat oder Magnesiumchlorid oder Magnesiumsulfat verwen-

4

det. Die Drehzahl des Granuliertellers wurde im Bereich von 18 - 21 U/min empirisch so eingestellt, daß der Feinanteil des im Granulierteller befindlichen Materials durch die Drehung bis in die Nähe des oberen Scheitelpunktes des Granuliertellers mitgenommen wurde. Es wurden fortlaufend Granalien mit einem Durchmesser zwischen 10 und 25 mm ausgetragen. Zur Verhinderung des Haftenbleibens von Material am Granulierteller war ein am Gestell der Granuliervorrichtung angebrachter Schaber vorgesehen. Durch die Zugabe des wässerigen Bindemittels zum Magnesiumoxid ergibt sich eine Erwärmung des Inhaltes des Granuliertellers wegen der bei der Reaktion $MgO + H_2O \rightarrow Mg(OH)_2$ freiwerdenden Reaktionsenthalpie. Dadurch hatten die ausgetragenen Granalien eine Temperatur von 130-150°C. Die Granalien hatten bei Verwendung von Wasser als Bindemittel eine Punktdruckfestigkeit von ca. 1000 - 1300 N. Die Rohdichte der die Grünkörper darstellenden Granalien war 2,2 - 2,5 $g/cm^3$ im getrockneten Zustand. Diese Granalien bzw. Grünkörper wurden anschließend bei 2000°C gebrannt und hatten nach dem Brand eine Dichte von 3,41 $g/cm^3$.

**Beispiele 2 bis 14 :**

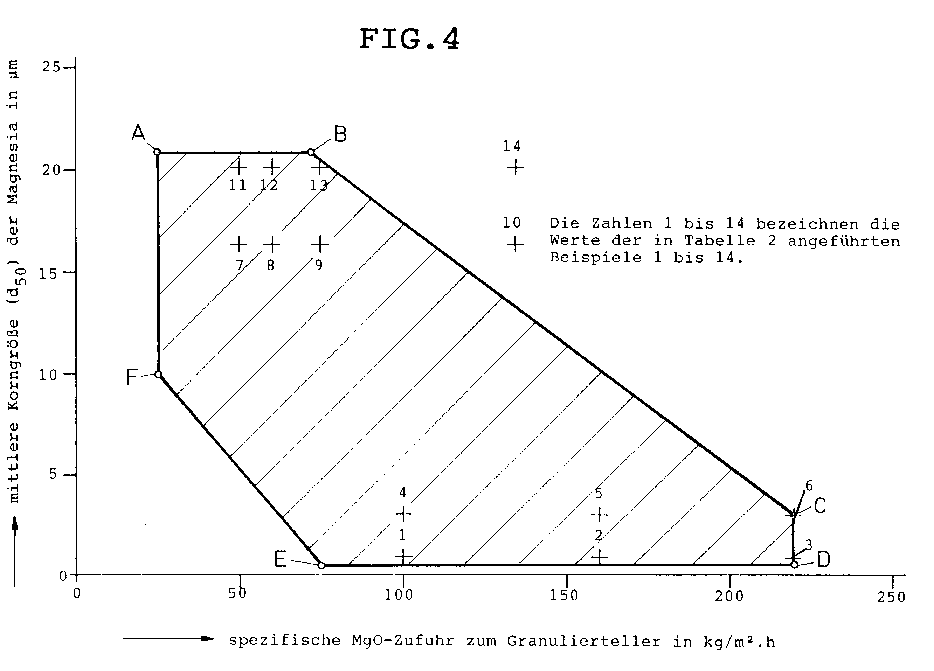

Es wurde analog Beispiel 1 vorgegangen, wobei als Ausgangsmaterial vier verschiedene Typen von kaustisch gebrannter Magnesia verwendet wurden, deren mittlere Korngröße (Medianwert $d_{50}$, d.i. jene Korngröße, bei der 50 % des Materials kleiner als der angegebene Wert sind) und deren Zusammensetzung in Gew.-% (auch %-Masse genannt) in der nachfolgenden Tabelle 1 spezifiziert sind. Die bei den einzelnen Beispielen verwendeten Materialien, deren Mengen und die Analysenwerte der erhaltenen Produkte sowie die jeweils beim Brand der Grünkörper angewendeten Temperaturen sind in der nachfolgenden Tabelle 2 angeführt. In Fig. 4 sind die bei den einzelnen Beispielen vorgesehen gewesenen Paarungen von Materialdurchsatz (Materialzufuhr zum Granulierteller) und mittlerer Korngröße der jeweils verwendeten Magnesia eingetragen und es ist weiter der im Rahmen der Erfindung bevorzugt vorgesehene Arbeitsbereich, der innerhalb des durch die Eckpunkte A) bis E) verlaufenden Linienzuges liegt, eingezeichnet.

## TABELLE 1

| Zusammensetzung des Magnesiumoxids | | Typ des Magnesiumoxids | | | |
|---|---|---|---|---|---|
| | | 1.<br>Synthetische Magnesia | | 2.<br>Magnesia erbrannt aus nat. Magnesit ($MgCO_3$) | |
| | | 1 a | 1 b | 2 a | 2 b |
| mittlere Korngröße $d_{50}$ | [µm] | 0,9 | 3,0 | 16,3 | 20,1 |
| GV | [%] | 1,57 | | 3,3 | |
| $Fe_2O_3$ | " | 0,02 | | 5,37 | |
| CaO | " | 0,42 | | 1,92 | |
| $SiO_2$ | " | 0,03 | | 0,42 | |
| MgO (geglüht) | " | 99,45 | | 91,8 | |

TABELLE 2

| Bei-spiel Nr. | Typ Kaust. MgO-Mehl lt. Tafel | Mittlere Korngröße MgO-Mehl (d50) [μm] | Zufuhr MgO-Mehl [kg/m².h] | Zufuhr Bindemittel (H2O) [l/t MgO] | Punktdruck-festigkeit der grünen Granalien [N] | Glühver-lust der grünen Granalien [%] | Durchmesser der grünen Granalien [mm] | Rohdichte der grünen Granalien* [g/cm³] | Brenn-temp. [°] | Rohdichte der Granalien nach Brand [g/cm³] |
|---|---|---|---|---|---|---|---|---|---|---|
| 1 | 1 a | 0,9 | 100 | ca. 200 | 1000 – 1300 | 12 – 14 | 10 – 25 | 2,2 – 2,5 | 2000 | 3,41 |
| 2 | | | 160 | | | | | | | 3,35 |
| 3 | | | 220 | | | | | | | 3,30 |
| 4 | 1 b | 3,0 | 100 | | | 11 – 13 | | | | 3,38 |
| 5 | | | 160 | | | | | | | 3,33 |
| 6 | | | 220 | | | | | | | 3,32 |
| 7 | 2 a | 16,3 | 50 | ca. 150 | | 5 – 7 | | 2,0 – 2,2 | 1800 | 3,44 |
| 8 | | | 60 | | | | | | | 3,37 |
| 9 | | | 75 | | | | | | | 3,32 |
| 10 | | | 135 | | | | | | | 3,25 |
| 11 | 2 b | 20,1 | 50 | | | | | | | 3,42 |
| 12 | | | 60 | | | | | | | 3,39 |
| 13 | | | 75 | | | | | | | 3,31 |
| 14 | | | 135 | | | | | | | 3,20 |

* trocken

## Patentansprüche

1. Verfahren zur Herstellung von grobkörniger Sintermagnesia, bei dem von einem pulverförmigen Magnesiumoxid ausgegangen wird, dieses zu Grünkörpern verarbeitet wird und die Grünkörper einem Sinterbrand bei hoher Temperatur unterworfen werden, dadurch gekennzeichnet, daß aus einem aktiven reaktionsfähigen pulverförmigen Magnesiumoxid mit einer Korngröße < 0,15 mm durch Aufbaugranulation auf einem Granulierteller bei einem Materialdurchsatz von weniger als 250 kg MgO/m$^2$ Tellerfläche und Stunde die Grünkörper, welche einem Sinterbrand unterworfen werden, gebildet werden.

2. Verfahren nach Anspruch 1, dadurch gekennzeichnet, daß gemahlenes kaustisches Magnesiumoxid, welches vorzugsweise eine Korngrößenverteilung, bei der 90 % des Materials kleiner als 0,1 mm sind, aufweist, zu den Grünkörpern verarbeitet wird.

3. Verfahren nach Anspruch 1 oder 2, dadurch gekennzeichnet, daß der Materialdurchsatz zwischen 35 und 220 kg MgO, vorzugsweise zwischen 50 und 120 kg, pro m$^2$ Tellerfläche und Stunde gehalten wird.

4. Verfahren nach Anspruch 3, dadurch gekennzeichnet, daß bei der Granulation mit einem Materialdurchsatz gearbeitet wird, der in in dem durch die nachfolgend genannten Eckpunkte definierten Flächenbereich des durch die den Materialdurchsatz (kg/m$^2$.h) angebende Abszisse und durch die den Medianwert $d_{50}$ der Korngröße (mittlere Korngröße $d_{50}$) des Magnesiumoxids angebende Ordinate gebildeten Flächenquadranten liegt, wobei die Eckpunkte dieses Flächenbereiches annähernd bei:

| A) | 21 $\mu$m - 25 kg/m$^2$.h | B) | 21 $\mu$m - 70 kg/m$^2$.h |
|---|---|---|---|
| C) | 3,0 $\mu$m - 220 kg/m$^2$.h | D) | 0,5 $\mu$m - 220 kg/m$^2$.h |
| E) | 0,5 $\mu$m - 75 kg/m$^2$.h | F) | 10 $\mu$m - 25 kg/m$^2$.h |

liegen.

5. Verfahren nach einem der Ansprüche 1 bis 4, dadurch gekennzeichnet, daß bei der Granulation eine mittlere Verweilzeit des Materials am Granulierteller von etwa 1/2 h bis 2 h, vorzugsweise etwa 1 h, eingehalten wird.

6. Verfahren nach einem der Ansprüche 1 bis 5, dadurch gekennzeichnet, daß ein Granulierteller, dessen Bordhöhe größer ist als ¼ des Tellerdurchmessers, verwendet wird.

7. Verfahren nach Anspruch 6, dadurch gekennzeichnet, daß mit einer zwischen 55° und 65° zur Horizontalen verlaufenden Neigung $\beta$ des Granuliertellers gearbeitet wird.

8. Verfahren nach einem der Ansprüche 1 bis 7, dadurch gekennzeichnet, daß als Granulationsbindemittel Wasser verwendet wird.

9. Verfahren nach einem der Ansprüche 1 bis 7, dadurch gekennzeichnet, daß als Granulationsbindemittel eine wässerige Lösung oder Suspension eines bindenden Stoffes, der beim Sinterbrand praktisch rückstandsfrei verflüchtigt oder als Rückstand Magnesiumoxid bildet, wie z.B. Magnesiumsulfat, Magnesiumchlorid oder Magnesiumlignosulfonat, verwendet wird.

**Claims**

1. A process for producing coarse-grained sintered magnesia by starting from pulverulent magnesium oxide, converting the same to green pellets and subjecting the green pellets to sinter-burning at a high temperature, characterized in that the green pellets, which are subjected to sinter-burning, are formed of an active reactive pulverulent magnesium oxide having a grain size of < 0.15 mm by build-up agglomeration on a disc agglomerator at a material throughput of less than 250 kg MgO/m$^2$ disc surface and hour.

2. A process according to claim 1, characterized in that ground caustic magnesium oxide, preferably having a grain size distribution in which 90 % of the material is smaller than 0.1 mm is converted to said green pellets.

7

3. A process according to claim 1 or 2, characterized in that the material throughput is maintained at between 35 and 220 kg MgO, preferably between 50 and 120 kg, per m$^2$ disc surface and hour.

4. A process according to claim 3, characterized in that agglomeration is carried out at a material throughput which is within the area region defined by the corner points given below, of the area quadrant formed by the abscissa indicating the material throughput (kg/m$^2$.h) and by the ordinate indicating the median value $d_{50}$ of the grain size (mean grain size $d_{50}$) of the magnesium oxide, said corner points of said area region being located approximately at:

| A) | 21 $\mu$m - 25 kg/m$^2$.h | B) | 21 $\mu$m - 70 kg/m$^2$.h |
|---|---|---|---|
| C) | 3.0 $\mu$m - 220 kg/m$^2$.h | D) | 0.5 $\mu$m - 220 kg/m$^2$.h |
| E) | 0.5 $\mu$m - 75 kg/m$^2$.h | F) | 10 $\mu$m - 25 kg/m$^2$.h |

5. A process according to one of claims 1 to 4, characterized in that a mean residence time of the material on the disc agglomerator of about 1/2 hour to 2 hours, preferably about 1 hour, is maintained in agglomeration.

6. A process according to one of claims 1 to 5, characterized in that a disc agglomerator is used whose rim height is larger than 1/4 of the disc diameter.

7. A process according to claim 6, characterized in that it is operated at an inclination $\beta$ of the disc agglomerator relative to the horizontal ranging between 55° and 65°.

8. A process according to one of claims 1 to 7, characterized in that water is used as said agglomeration binder.

9. A process according to one of claims 1 to 7, characterized in that an aqueous solution or suspension of a binder material is used as said agglomeration binder, which volatilizes virtually without any residue or forms magnesium oxide as a residue in sinter-burning, such as, for instance, magnesium sulphate, magnesium chloride or magnesium lignosulphonate.

## Revendications

1. Procédé pour la production de la magnésie frittée à gros grains en partant d'un oxyde de magnésium pulvérulent, convertissant celui-ci en granulés crus et soumettant les granulés crus à un frittage à une température élevée, caractérisé en ce que les granulés crus, qui sont soumis à un frittage, sont formés à partir d'un oxyde de magnésium actif, reactif et pulvérulent ayant une grosseur de grain de < 0,15 mm, par granulation d'accumulation sur un disque de granulation à un débit des matières de moins de 250 kg MgO/m$^2$ de la surface de disque et heure.

2. Procédé selon la revendication 1, caractérisé en ce que de l'oxyde de magnésium caustique broyé ayant de préférence une granulométrie pour laquellle 90 % de la matière est inférieur à 0,1 mm est converti en lesdits granulés crus.

3. Procédé selon la revendication 1 ou 2, caractérisé en ce que le débit des matières est maintenu entre 35 et 220 kg MgO, de préférence entre 50 et 120 kg, par m$^2$ de la surface de disque et heure.

4. Procédé selon la revendication 3, caractérisé en ce que, pendant la granulation, il est opéré à un débit des matières situé dans la plage de surface définie par les points en angle mentionnés ci-dessous, du quadrant de surface formé par l'abscisse indiquant le débit des matières (kg/m$^2$.h) et par l'ordonné indiquant la valeur médiane $d_{50}$ de la grosseur de grain (grosseur de grain moyenne $d_{50}$) de l'oxyde de magnésium, les points en angle de cette plage de surface étant approximativement à:

| A) | 21 $\mu$m - 25 kg/m$^2$.h | B) | 21 $\mu$m - 70 kg/m$^2$.h |
|----|---------------------------|----|---------------------------|
| C) | 3,0 $\mu$m - 220 kg/m$^2$.h | D) | 0,5 $\mu$m - 220 kg/m$^2$.h |
| E) | 0,5 $\mu$m - 75 kg/m$^2$.h | F) | 10 $\mu$m - 25 kg/m$^2$.h |

**5.** Procédé selon l'une des revendications 1 à 4, caractérisé en ce qu'un temps de séjour moyen de la matière sur le disque de granulation allant de 1/2 h à 2 h, de préférence 1 h d'environ, est maintenu pour la granulation.

**6.** Procédé selon l'une des revendications 1 à 5, caractérisé en ce qu'un disque de granulation ayant une hauteur de bord supérieure à un quart du diamétre de disque est utilisé.

**7.** Procédé selon la revendication 6, caractérisé en ce qu'il est opéré à une inclination $\beta$ du disque de granulation à l'horizontale comprise entre 55° et 65°.

**8.** Procédé selon l'une des revendications 1 à 7, caractérisé en ce que de l'eau est utilisée en tant que liant de granulation.

**9.** Procédé selon l'une des revendications 1 à 7, caractérisé en ce qu'une solution aqueuse ou une suspension d'une matière liante est utilisé en tant que liant de granulation, laquelle matière est volatilisée au cours du frittage pratiquement sans résidus ou forme de l'oxyde de magnésium comme résidu, tel que par exemple du sulfate de magnésium, du chlorure de magnésium ou du lignosulfonate de magnésium.

FIG. 1

FIG. 3

FIG. 2

FIG. 4

Die Zahlen 1 bis 14 bezeichnen die Werte der in Tabelle 2 angeführten Beispiele 1 bis 14.

mittlere Korngröße ($d_{50}$) der Magnesia in µm

spezifische MgO-Zufuhr zum Granulierteller in kg/m².h